# EUROPÄISCHE PATENTANMELDUNG

(11) **EP 1 275 667 A1**
(43) Veröffentlichungstag der Anmeldung: **15.01.2003**
(21) Anmeldenummer: 02011701.6
(22) Anmeldetag: 25.05.2002
(51) Int. Cl.: C08F 212/00, C08F 236/10, C08F 220/10, C08F 2/22, C04B 24/26

(54) **Verfahren zur Herstellung von schutzkolloidstabilisierten, emulgatorfreien, wässrigen Dispersionen**

(30) Priorität: 05.07.2001 DE 10132614
(71) Anmelder: PolymerLatex GmbH & Co.KG, 45772 Marl (DE)
(72) Erfinder: Brizzolara, Davide, Dr., 45701 Herten (DE); Vorholt, Herbert, 45721 Haltern (DE)

(57) **Zusammenfassung**

Gegenstand der Erfindung ist ein Verfahren zur Herstellung von schutzkolloidstabilisierten, emulgatorfreien, wässrigen Dispersionen auf der Basis von mindestens zwei Monomeren ausgewählt aus Vinylaromaten, 1,3-Dienen und/oder (Meth)Acrylsäureestern, in Gegenwart von Hilfsstoffen und gegebenenfalls weiteren Comonomeren in einer Menge von 0,1 Gew.-% bis 20 Gew.-%, bezogen auf die Gesamtmenge an Monomeren,
dadurch gekennzeichnet,
dass mindestens 10 Gew.-% der gesamten Wassermenge erst in das Reaktionsgefäß gegeben werden, nachdem die Monomeren in das Reaktionsgefäß gegeben wurden und der Umsatz, bezogen auf 100 % der Monomeren, mindestens 40 % beträgt.

## Beschreibung

Die vorliegende Erfindung betrifft ein Verfahren zur Herstellung von schutzkolloidstabilisierten, emulgatorfreien, wässrigen Dispersionen und deren Verwendung.

Es ist seit langem bekannt, dass Kunststoffdispersionen in Bauanwendungen eingesetzt werden. Kunstoffdispersionen werden aus zwei Gründen zu hydraulisch abbindenden Systemen zugegeben. Zum einen erleichtert der Dispersionszusatz die Verarbeitbarkeit der Baustoffmasse, weil über einen längeren Zeitraum seine Konsistenz gleich bleibt (Zementstabilität). Der zweite Grund ist die Verbesserung der mechanischen Eigenschaften wie die Biegezug- und Druckfestigkeit von Mörteln, die Klebkraft von mineralischen Fliesenklebern, etc. Die Verarbeitbarkeit und die mechanischen Eigenschaften einer Mörtelmischung hängen stark vom Wasser- Zement-Verhältnis ab. Bei einem großen Wasser-Zement-Verhältnis ist der Mörtel flüssiger, aber die Standfestigkeit und die mechanischen Eigenschaften wie Biegezug- und Druckfestigkeiten sind schlechter. Der Dispersionszusatz ermöglicht eine optimale Einstellung des Systems bezüglich Verarbeitbarkeit und mechanischen Eigenschaften.

In der Bauindustrie werden aufgrund von verschiedenen Vorteilen Dispersionen bevorzugt in Form ihrer getrockneten redispergierbaren Pulver eingesetzt. Der Transport von wässrigen Dispersionen hat wirtschaftliche Nachteile, weil bei einem Festkörpergehalt von 50 Gew.-% die Hälfte des Gewichts das Wasser ausmacht. Das Verhältnis von Wirksubstanz zu Transportgewicht ist einfach zu ungünstig. Der Transport von Pulvern ist wirtschaftlicher. Erst bei der Anwendung wird Wasser zugegeben. Das trockene Pulver kann zusammen mit den anderen trockenen Rohstoffen wie Sand, Zement, etc. gelagert werden. Wässrige Dispersionen haben den Nachteil, dass sie separat gelagert werden müssen. Außerdem sind Dispersionen frostempfindlich und müssen in einem beheizten Raum gelagert werden. Bei der Applikation ist die Wassermenge der Dispersion zu berücksichtigen, was eine genaue Wasserdosierung erschwert.

Eine etablierte Methode zur Herstellung von Polymerpulvern ist die Sprühtrocknung der wässrigen Dispersion in einem warmen Luft- oder Inertgasstrom. Das Pulver besteht aus der Dispersion, einem Sprühhilfsmittel, das die Redispergierbarkeit verbessert und Verklumpungen während des Trocknens verhindert, und einem anorganischen Feststoff, das als Antiblockmittel die Rieselfähigkeit des Pulvers auch bei Lagerung gewährleistet. Als Sprühhilfsmittel werden verblockende, polare makromolekulare oder niedermolekulare Verbindungen eingesetzt. In der DE-OS 20 49 114 wird Polyvinylalkohol (PVA) und Melamin-Formaldehyd-Natriumsulfonatharz als Sprühzusatz verwendet. Als Antiblockmittel sind feingemahlene Silikate, Talkum, Dolomit, Diatomeenerde, Kieselgur, kolloidales Silikagel, pyrogen erzeugtes Siliciumdioxid u. a. geeignet. Die Menge an Antiblockmittel richtet sich nach der Pulverkorngröße und nach der beabsichtigten Lagerdauer.

Es hat sich gezeigt, dass ein Pulver insbesondere dann vergleichbare Eigenschaften wie die Basisdispersion aufweist, wie beispielsweise Zementstabilität im Mörtel, wenn es redispergierbar ist. Das bedeutet, das nach der Sprühtrocknung das Pulver mit einer mittleren Korngröße von ca. 30 bis 300 µm, bei Wasserzugabe fast in die ursprüngliche Teilchengröße (Primärteilchengröße) der Dispersion zerfällt. Wobei die Bestimmung der Teilchengröße oder Teilchengrößenverteilung durch Lichtstreumethoden aufgrund der unterschiedlichen Streulichtintensität von großen und kleinen Partikeln bei einer breiten Teilchengrößenverteilung äußerst schwierig ist. Bei der Herstellung redispergierbarer Pulver ist der Einsatz schutzkolloidstabilisierter, emulgatorfreier Dispersionen von Vorteil. Die abstoßenden Kräfte reichen bei einer sterischen Stabilisierung durch Schutzkolloide weiter, als bei einer Stabilisierung durch Emulgatoren. Bei der Trocknung nähern sich die Partikel im Falle der sterischen Stabilisierung nur so weit, dass bei Wasserzugabe die Partikel redispergieren und erneut eine stabile Dispersion entsteht (C. S. Hirtzel, R. Rajagoplan, Colloidal Phenomena, Advanced Topics Noyes Publications, New Jersey, 1985). Im Falle der Emulgatorstabilisierung kommen sich die Partikel bei der Trocknung näher. Bei der Zugabe von Wasser redispergiert das Pulver nicht, weil sich die Partikel nicht mehr voneinander lösen können.

Die Polymerbasis der Dispersionen, die in Bauanwendungen eingesetzt werden, ist vielfältig.

So werden Polyvinylacetate, Vinylacetat Ethylen Copolymere und Vinylacetat Vinylester Copolymere eingesetzt. Wird eine hohe Verseifungsstabilität gefordert, dann finden Styrol-Acrylat-, Reinacrylat- und Styrol-Butadien-Copolymerisate Anwendung. Besonders geeignet für hydraulisch abbindende Systeme sind aufgrund der hohen Verseifungsstabilität Styrol-Butadien-Copolymere. Carboxylierte Styrol-Butadien-Copolymere haben außerdem eine gute Haftung auf polaren Untergründen.

Bei wässrigen Dispersionen werden bevorzugt Acrylate und Styrol-Butadien-Copolymerisate eingesetzt. Die Pulver sind hingegen fast ausschließlich auf Basis von Vinylacetat-Ethylenund Vinylacetat-Vinylester-Copolymeren, weil diese aus traditionellen und chemischen Gründen Schutzkolloid stabilisiert sind und aus diesem Grunde daraus gut redispergierbare und zementstabile Pulver erhalten werden können. Das Vinylacetat wird aufgrund seiner hohen Polarität durch polare Schutzkolloide gut stabilisiert. Überwiegend wird teilverseiftes Polyvinylacetat (PVA) als Schutzkolloid eingesetzt, weil aufgrund der ähnlichen Polarität von PVA und Vinylacetat PVA ein sehr gutes Schutzkolloid für vinylacetathaltige Dispersionen ist.

Dispersionen mit hydrophoben Monomeren wie Styrol oder Butadien, die mit polaren Schutzkolloiden wie PVA oder Hydroxyethylcellulose (HEC) stabilisiert werden, sind schwierig herzustellen, weil sie sehr viskos sind (US 4 670 505). Darum werden diese Copolymerisate in der Regel durch wirksamere ionische und nichtionische Emulgatoren stabilisiert, mit denen die Viskosität im Prozess kleiner ausfällt. Um ein Pulver auf Reinacrylat, Styrol-Acrylat oder Styrol-Butadien-Basis herstellen zu können, das technisch mit vinylacetathaltigen Pulvern gleichwertig sein soll, ist es von Vorteil, wenn die Dispersion sterisch durch Schutzkolloide stabilisiert ist und auf Emulgatoren verzichtet wird. Neben der Redispergierbarkeit verleiht das Schutzkolloid der Dispersion andere rheologische- und Haftungs-Eigenschaften als der Emulgator, der außerdem die Wasserfestigkeit der Dispersion verschlechtert. Die Herstellung schutzkolloidstabilisierter hydrophober Copolymerisate ist daher von großem Interesse.

Es sind zahlreiche Herstellungsverfahren für schutzkolloidstabilsierte, emulgatorfreie Dispersionen auf Basis von hydrophoben Copolymerisaten wie Styrol-Acrylat, oder StyrolButadien bekannt, die es erlauben, die Viskosität im Prozess zu kontrollieren, die aber hinsichtlich des Verfahrens Nachteile aufweisen.

Die Viskosität von Vinylacetat-(Meth)acrylat-Dipersionen mit einem Vinylacetat-Anteil < 50 % unter Verwendung von PVA oder HEC als Schutzkolloid lässt sich durch stabilisierende Hilfsmittel wie Allylalkohol (USP 4 670 505), Propanol, oder Ethylenglykol (GB-PS 1278813) reduzieren. In EP-A 013 478 wird die Viskosität durch Wasser mischbare organischen Verbindungen wie Methanol und Ethanol reduziert. Die flüchtigen organischen Verbindungen müssen nach der Polymerisation entfernt werden.

In der EP-A 538 571 wird zur Regulierung der Viskosität von Dispersionen mit einem Styrolanteil > 50 Massen-% und/oder C1- bis C8-Alkyl(meth)acrylat die gesamte Schutzkolloidmenge vorgelegt und ein gemischtes Initiatorsystem bestehend aus einem sauren Peroxid und einem Redox-System, oder ein saures Peroxid oder ein Redox-System allein eingesetzt. Außerdem kann die Viskosität durch Verwendung von Triethanolamin als viskositätsregulierende Verbindung gesenkt werden.

In der EP-A 821 016 und EP-A 723 975 wird auf die viskositätsregulierende Wirkung von polaren Comonomeren, die bereits während der Polymerisation vernetzen können, wie Hydroxyethylmethacrylat und Glycidyl(meth)acrylat bei der Polymerisation von Styrol-Acrylaten mit teilverseiftem Polyvinylacetat als Schutzkolloid hingewiesen. Die Polymerisation von Styrol-Butadien-Copolymerisaten gelingt nicht.

In der WO 99/16794 ist beschrieben, dass durch Einsatz eines Gemisches von Schutzkolloiden, die sich in der Oberflächenspannung unterscheiden, sterisch stabilisierte Styrol-Butadien-Copolymer Dispersionen herstellbar sind, die sich zu einem zementstabilen, redispergierbaren Pulver sprühtrocknen lassen. Das eine Schutzkolloid hat als 2%ige wässrige Lösung eine Oberflächenspannung > 40 mN/m, das andere < 40 mN/m als 2%ige wässrige Lösung. Die so hergestellte Styrol-Butadien-Dispersion hat bei einem Festkörpergehalt von 47,0 % eine Viskosität von 380 mPas (Brookfield-Viskosimeter, 20 °C, 20 Upm) und eine Teilchengröße von 950 nm (Coulter LS 230, Dw). Eine Zementmischung ist mit dem Pulver erst bei einem Wasser-Zement-Verhältnis von 1,03 zementstabil. Die mechanischen Eigenschaften eines Mörtels, wie Druckfestigkeit und Biegezugfestigkeit sind schlechter, wenn viel Wasser zur Herstellung eingesetzt wird. Wird nur ein Schutzkolloid eingesetzt, mit einer Oberflächenspannung > 40 mN/m, so ist die Redispergierbarkeit des aus der Dispersion hergestellten Pulvers unbefriedigend. Wird nur ein Schutzkolloid eingesetzt, mit einer Oberflächenspannung < 40 mN/m, so ist die Zementstabilität des aus der Dispersion hergestellten Pulvers unbefriedigend.

Die Herstellung einer sterisch stabilisierten Dispersion eines Styrol-Butadien-Copolymerisats, das sich zu einem zementstabilen Pulver sprühtrocknen lässt, mit nur einem Schutzkolloid, gelingt in der WO 99/28360, indem das Schutzkolloid teilweise vorgelegt und teilweise dosiert wird. Ein Nachteil bei diesem Verfahren sind die sehr großen Teilchengrößen der Dispersion von ca. 2,5 µm bis 4,5 µm. Erfahrungsgemäß sind Dispersionen mit diesen Teilchengrößen (deutlich über 1 µm) nicht lagerstabil. Ein Teil der Monomere muss vorgelegt und teilweise dosiert werden. Werden alle Monomere während der Polymerisation zugegeben, ist der Polymerisationsumsatz nicht vollständig.

Mit Unterstützung eines Mercaptosilans wird in WO 97/15603 mit teilverseiftem Polyvinylalkohol eine butadienhaltige, schutzkolloidstabilisierte Dispersion hergestellt. Nachteil dieses Verfahrens ist die Beschränkung auf das Mercaptosilan und die hohen Kosten für das Silan. Außerdem werden Emulgatoren verwendet.

Die Aufgabe der Erfindung bestand darin, ein Verfahren zur Herstellung von emulgatorfreien, schutzkolloidstabilisierten, wässrigen Dispersionen bereitzustellen, das die geschilderten Nachteile des Standes der Technik überwindet, insbesondere die Reglung der Viskosität unter Verwendung organischer Lösemittel, Emulgatoren, aufwendig herzustellender Schutzkolloide oder Mercaptosilanen sowie die Einstellung der mittleren Teilchendurchmesser unterhalb stabiler kolloidaler Dimensionen von 1000 nm erlaubt, und außerdem die Möglichkeit bietet, gut redispergierbare und zementstabile Kunststoffpulver durch Trocknung der Dispersion herzustellen.

Gegenstand der Erfindung ist ein Verfahren zur Herstellung von schutzkolloidstabilisierten, emulgatorfreien, wässrigen Dispersionen auf der Basis von mindestens zwei Monomeren ausgewählt aus Vinylaromaten, 1,3-Dienen und/oder (Meth)Acrylsäureestern, in Gegenwart von Hilfsstoffen und gegebenenfalls weiteren Comonomeren in einer Menge von 0,1 Gew.-% bis 20 Gew.-%, bezogen auf die Gesamtmenge an Monomeren,
dadurch gekennzeichnet,
dass mindestens 10 Gew.-% der gesamten Wassermenge erst in das Reaktionsgefäß gegeben werden, nachdem die Monomeren in das Reaktionsgefäß gegeben wurden und der Umsatz, bezogen auf 100 % der Monomeren, mindestens 40 % beträgt.

Geeignete Vinylaromaten sind Styrol und Methylstyrol, wobei Styrol bevorzugt wird.

Beispiele für 1.3-Diene sind 1-3-Butadien und Isopren, wobei 1.3-Butadien bevorzugt wird.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat.

In Frage kommende Comonomere sind Hydroxy(C1- bis C8-Alkyl)(meth)acrylsäureester wie Hydroxyethylacrylat, Hydroxyethylmethacrylat, Hydroxypropylacrylat, Hydroxy(2-ethylhexyl)acrylat, bevorzugt Hydroxyethylmethacrylat; ethylenisch ungesättigte Mono- und Dicarbonsäuren, vorzugsweise Acrylsäure, Methacrylsäure, Fumarsäure, Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure und 2-Acrylamido-2-methyl-propansulfonsäure. Weitere Beispiele sind vorvernetzende Comonomere wie mehrfach ethylenisch ungesättigte Comonomere, wie z. B. Divinyladipat, Diallylmaleat, Allylmethacrylat oder nachvernetzende Comonomere, beispielsweise N-Methylolacrylamid (NMA), N-Methylolmethacrylamid (NMMA) oder Ester des N-Methylolacrylamids oder N-Methylolmethacrylamids. Geeignet sind auch epoxyfunktionelle Comonomere wie Glycidylmethacrylat und Glycidylacrylat. Weitere Beispiele sind Silicium-funktionelle Comonomere wie Acryloxypropyltri(alkoxy)-und Methacryloxypropyltri(alkoxy)-Silane, Vinyltrialkoxysilane und Vinylmethyldialkoxysilane, wobei die Alkoxygruppen beispielsweise Ethoxy- und Ethoxypropylenglykolether-Reste sein können. In einer bevorzugten Ausführungsform werden die gesamten Monomere im Zulauf während der Polymerisation in das Reaktionsgefäß gegeben, können aber auch teilweise vorgelegt und dosiert werden.

Beispiele für einsetzbare Schutzkolloide sind Polyvinylalkohol, Polyethylenglykol, modifizierte Stärke und Dextrine, Cellulosederivate wie Hydroxyethylcellulose, Hydroxypropylcellulose oder Carboxymethylcellulose, Polyvinylpyrolidon, Polystyrol-b-Polyethylenoxid- oder Poly(Methacrylat-b-Polyethylenoxid-Blockcopolymere und Casein. Bevorzugt werden Polyvinylalkohole mit einem Polymerisationsgrad von 200 bis 2000 und einem Hydrolysegrad von 74 bis 99,5 % in einer Menge von 1 bis 20 Teilen / 100 Teile Monomere eingesetzt. Das Schutzkolloid oder ein Schutzkolloidgemisch wird vorgelegt, kann aber auch zwischen Vorlage und Zulauf aufgeteilt werden oder nur während der Polymerisation im Zulauf zugegeben werden.

Die radikalischen Initiatoren sind Peroxide, Hydroperoxide, Wasserstoffperoxid, Natrium-, Kalium-, oder Ammoniumperoxodisulfat, Azoverbindungen, allein oder in Kombination. In einer bevorzugten Ausführungsform der Erfindung wird wasserlösliches Natriumperoxodisulfat in Kombination mit tert.-Butylhydroperoxid in einer Gesamtmenge von 0,01 bis 2 Massen-% bezogen auf die gesamten Monomeren, vorgelegt. Als Aktivatoren wirken wasserlösliche Reduktionsmittel, wie Natrium-, Kalium-, Ammoniumsulfit oder - bisulfit, Natriumformaldehydsulfoxylat oder Ascorbinsäure. Bevorzugt wird der Aktivator, in einer Menge von 0,01 bis 2 Massen-%, bezogen auf die gesamten Monomeren, während der Polymerisation dosiert.

Zur Einstellung des pH-Werts während der Polymerisation wird ein oder mehrere Puffer, wie beispielsweise Natriumcarbonat, Natriumhydrogencarbonat, Trikaliumphosphat, Ethylendiamintetracetat, oder Nitrilotriessigsäure eingesetzt. Tertiäre Amine können zur Unterstützung eingesetzt werden.

Zur Steuerung des Molekulargewichts können während der Polymerisation regelnde Substanzen eingesetzt werden. Sie werden in Mengen zwischen 0,1 bis 3 Massen-% bezogen auf die Gesamtmonomere eingesetzt. Die Molekulargewichtsregler können vorgelegt, zugegeben oder teilweise vorgelegt und teilweise zugegeben werden. Beispiele solcher Substanzen sind Mercaptone wie z. B. n-Dodecylmercaptan, tert.-Dodecylmercaptan, Mercaptopropionsäure, Mercaptopropionsäuremethylester, oder tert. Amine, wie z. B. Triethanolamin. Die Polymerisationstemperatur beträgt 30 bis 90 °C, vorzugsweise 50 bis 80 °C.

Die Polymerisation wird bevorzugt so durchgeführt, dass die gesamte Schutzkolloidmenge vorgelegt wird und die Monomeren und andere Komponenten während der Polymerisation zugeführt werden. Es ist aber auch möglich, das Schutzkolloid und die Monomere teilweise vorzulegen und teilweise zuzugeben, oder das Schutzkolloid und die Monomere vollständig vorzulegen.

Ein Teil der gesamten Wassermenge wird erst nach erfolgter Zugabe der Monomere zugegeben, wobei zum Zeitpunkt des Beginns der Wasserzugabe der Umsatz mindestens 40 %, bezogen auf 100 %, Monomer beträgt. Das steht im Gegensatz zum Stand der Technik, wo bevorzugt Wasser vorgelegt wird, oder Wasser parallel zu den Monomeren zugegeben wird, um durch den Verdünnungseffekt die Viskosität gering zu halten. Bevorzugt werden 20 Gew.-% Wasser, bezogen auf die gesamte Wassermenge, in einer Stunde zugegeben, nachdem alle Monomere in den Reaktionsbehälter gegeben wurden und der Umsatz, bezogen auf 100 % Monomere, mindestens 40 % beträgt. Mit dem Wasser, das nach erfolgter Zugabe der Monomere zugegeben wird, kann auch weiteres Schutzkolloid zugegeben werden. In einer weiteren Ausführungsform wird parallel zur Zugabe der Monomere 10 bis 60 Gew.-% der gesamten Wassermenge oder 10 bis 60 Gew.-% der gesamten Wassermenge zusammen mit Schutzkolloid in den Reaktor gegeben und nach erfolgter Monomerzugabe nochmals 10 bis 40 Gew.-% Wasser gegebenenfalls mit Schutzkolloid, bezogen auf den Festkörpergehalt der Dispersion, in den Reaktor gegeben. Die im Wasser gelöste Schutzkolloidmenge beträgt dabei 0,5 bis 15 Gew.-% bezogen auf den Festkörpergehalt der Dispersion. Die Wassermenge, die nach erfolgter Monomerzugabe in den Reaktor eingefahren wird, und die Zugabezeit wird so bemessen, dass die Viskosität abfällt. Die dazu nötige Wassermenge liegt je nach Zugabegeschwindigkeit zwischen 10 bis 40 Gew.-%, bezogen auf die gesamte Wassermenge und vorzugsweise bei 20 Gew.-%, wenn die Zugabe innerhalb einer Stunde erfolgt. Es war überraschend, dass das erfindungsgemäße Verfahren sich positiv auf die Viskosität und die Zementstabilität der Dispersion und auf die Redispergierbarkeit und die Zementstabilität des durch Sprühtrocknung daraus hergestellten Pulvers auswirkt.

Das Verhältnis von Festkörper zu Wasser wird entsprechend eines Feststoffgehalts der fertigen Dispersion von 30 bis 70 %, vorzugsweise von 40 bis 60 %, eingestellt.

Nach beendeter Monomerzugabe kann in bekannter Weise durch Nachinitiierung die Polymerisation bis zu einem niedrigen Restmonomergehalt weitergeführt werden.

Das Polymerisat weist eine Glasübergangstemperatur von - 40 bis + 100 °C, vorzugsweise von - 20 bis + 50 °C, auf. Die Zusammensetzung des Copolymerisats ist so gewählt, dass die oben angegebene Glasübergangstemperatur erreicht wird. Dabei ist der Anteil des Comonomers zu berücksichtigen. Die Tg kann mittels der FOX-Gleichung näherungsweise vorausberechnet werden. Nach FOX T. G., Bull. Am. Physics Soc. 1, 3, page 123 (1956) gilt: 1/Tg = x1/Tg1 + X2/Tg2 + .....+ xn/Tgn, wobei xn für den Massenbruch (Gew.-%/100) des Monomers n steht, und Tgn die Glasübergangstemperatur in Grad Kelvin des Homopolymers des Monomer n ist. Tg-Werte für Homopolymerisate sind in Polymer Handbook 2end Edition, J. Wiley & Sons, New York (1975) aufgeführt. Die Glasübergangstemperatur Tg der Polymerisate kann in bekannter Weise mittels Differential Scanning Calorimetry (DSC) ermittelt werden.

Die erfindungsgemäßen Dispersionen und daraus hergestellten Pulver sind geeignet zur Herstellung von Klebstoffzusammensetzungen, wie z. B. Fliesenklebern, Spachtelmassen, Mörtel, wie z. B. Zementmörteln, Kalkmörteln, Trockenmörteln, Putze und Gipsbaustoffen sowie Dispersionsfarben.

Gegenstand der Erfindung sind auch schutzkolloidstabilisierte, emulgatorfreie, wässrige Dispersionen auf der Basis von Vinylaromaten und 1,3-Dienen und gegebenenfalls weiteren Comonomeren in einer Menge, bezogen auf die Gesamtmenge an Monomeren, von 0,1 Gew.-% bis 20 Gew.-%, erhalten durch Umsetzung der Monomeren in Gegenwart von Hilfsstoffen, wobei mindestens 10 Gew.-% der gesamten Wassermenge erst in das Reaktionsgefäß gegeben werden, nachdem die Monomeren in das Reaktionsgefäß gegeben wurden und der Umsatz, bezogen auf 100 % der Monomeren, mindestens 40 % beträgt. Die Herstellung sowie die Einsatzstoffe werden oben näher beschrieben.

Die nachfolgenden Beispiele dienen zur weiteren Erläuterung der Erfindung. Die Versuchsergebnisse sind in Tabelle 1 zusammengestellt.

### Sprühtrocknung der Dispersionen

Die Dispersionen wurden mit 10 Teilen PVA (als ca. 20%ige Lösung) / 100 Teile Dispersionsfeststoff versetzt und auf einen Feststoffgehalt von 35 % eingestellt. Der Latex wurde in einer Sprühtrocknungsapparatur in Luftgleichstrom getrocknet. Als Antiblockmittel wurden 10 % (bezogen auf Feststoffgehalt) eines Talkum-Dolomit-Gemisches (1:1) eingesetzt, das während der Trocknung parallel zur Speise zugeführt wurde.

### Teilchengröße nach Redispergierung in Wasser mit und ohne Ultraschallbehandlung

Das Pulver wurde in Wasser dispergiert und auf eine Konzentration von 0,1 % verdünnt. Die Teilchengrößenverteilung wurde mit einem Microtrac X-100 der Fa. Malvern vor und nach 900 s Ultraschallbehandlung gemessen.

### Bestimmung der Mörteleigenschaften der Dispersion und der daraus hergestellten Pulver

Die Dispersion, oder das Dispersionspulver wurde im Mörtel (400 g Sand 2-4 mm, 600 g Sand 1 bis 2 mm, 1000 g Sand 0,5 bis 1,2 mm, Sand H 33, Zement PZ 35 F) bei einem Wasser/Zement-Verhältnis (W/Z) von 0,38 oder 0,46 und einem Kunststoff/Zement-Verhältnis (K/Z) von 0,1 und 5 g des Entschäumers Bevaloid 6352 DD auf Verarbeitbarkeit geprüft. Nach DIN 18555 wird diese Größe als Ausbreitmaß ermittelt. Auf einer Glasplatte wird in der Mitte mit Hilfe eines Setztrichter ein Mörtelkuchen geformt, der, ggf. mit Polymer-Dispersion oder -Pulver versehen ist. Der Mörtelkegel, bzw. Mörtelkuchen wird anschließend durch 15 Hubstöße (1 Hub/s) durch die Erschütterung beim Aufschlagen der Platte ausgebreitet. Der Durchmesser des Ausbreitkuchens, gemessen nach 0, 20, 40 und 60 min, ergibt das Ausbreitmaß des Mörtels, welches ein Maß für die Zementstabilität, bzw. der Verarbeitbarkeit eins Mörtels wiederspiegelt. Es wurden Mörtelprismen hergestellt, an denen die Biegezug- und Druckfestigkeit gemessen wurde. Die Messungen wurden nach 7 Tagen Wasserlagerung und 21 Tagen Trockenlagerung gemessen. Der Luftporengehalt der Mörtelmischung wurde mit einem Luftgehaltsprüfer B 2030 der Fa. Form und Test Seidner nach DIN 18555 gemessen. Als Standardprobe wurde das Vinylacetat-Ethylen-Copolymerisat-Pulver Vinnapas RE 545 Z mit geprüft, das den technischen Standard bei den Marktüblichen Pulvern repräsentiert. Die Prüfergebnisse sind in Tabelle 1 zusammengefasst.

### Herstellung der erfindungsgemäßen Dispersionen

### Beispiel 1:

In einem 12-Liter Druckautoklaven mit Blattrührer und Manteltemperierung wurden 1622 g Wasser, 1058 g einer 18,9%igen PVA-Lösung (Hydrolisierungsgrad ca. 87 %), 4 g EDTA und 8 g Triethanolamin vorgelegt und auf 70 °C aufgeheizt. Wenn die Reaktorinnentemperatur konstant bleibt werden 4 g Natriumperoxodisulfat und 34,3 g tert.-Butylhydroperoxid (70%ig) im Schuß zugegeben. Fünf Minuten danach wird mit der Dosierung der Zuläufe begonnen. 2400 g Styrol, 16 g tert.-Dodecylmercaptan, 200 g Hydroxyethylmethacrylat und 1400 g Butadien werden in fünf Stunden in den Reaktor eingefahren. Parallel dazu werden 870 g einer 2,8%igen Natriumformaldehydsulfoxylat-Lösung innerhalb sieben Stunden zugegeben. Nach beendeter Monomerdosierung werden 11,4 g tert.-Butylhydroperoxid (70%ig) im Schuß zugegeben. Nach beendeter Zugabe von tert.-Butylhydroperoxid werden in der fünften Stunde bei einem Umsatz von 46 % bezogen auf 100 % Monomer 858 g Wasser innerhalb einer Stunde zugegeben. Nach beendeter Wasserzugabe wurde der Polymerisationsreaktor weitere vier Stunden unter Rührung sich selbst überlassen. Anschließend wurde der Reaktor in 20 Min. auf Raumtemperatur gekühlt. Die Brookfield-Viskosität der desodorierten Dispersion beträgt 1560 mPas (Spindel 3, 30 Upm) bei einem Festkörpergehalt von 50,6 %. Nach der Polymerisation betrug der Festkörpergehalt 48,3 %. Die Teilchengröße wurde mit einem Coulter Nano-Sizer gemessen und ergab 471 nm. Die Teilchengröße des in Wasser dispergierten Pulvers beträgt ohne Ultraschallbehandlung D₅₀=37 µm und nach 900 s Ultraschallbehandlung D₅₀= 9,12 µm (Microtrac-X100). Eine Mörtelmischung ist mit dem aus der Dispersion durch Trocknung hergestellten Pulver bei einem Wasser-Zement-Verhältnis (W/Z) von 0,38 zu einem Mörtelkuchen verarbeitbar, das aber kein Ausbreitmaß zeigt. Bei einem W/Z-Verhältnis von 0,46 hat die Mörtelmischung ein höheres Ausbreitmaß (Tabelle 1).

### Beispiel 2:

In einem 12-Liter Druckautoklaven mit Blattrührer und Manteltemperierung wurden 667 g Wasser, 1225 g einer 19,6 %igen PVA-Lösung (Hydrolisierungsgrad ca. 87 %), 4 g EDTA und 8 g Triethanolamin vorgelegt und auf 70 °C aufgeheizt. Wenn die Reaktorinnentemperatur konstant bleibt werden 4 g Natriumperoxodisulfat und 34,3 g tert.-Butylhydroperoxid (70%ig) im Schuß zugegeben. Parallel dazu werden 874 g Wasser innerhalb einer Stunde zugegeben. Fünf Minuten nach der Natriumperoxodisulfat und tert.-Butylhydroperoxid-Zugabe wird mit der Dosierung der Zuläufe begonnen. 2400 g Styrol, 16 g tert.-Dodecylmercaptan, 280 g Hydroxyethylmethacrylat und 1400 g Butadien werden in fünf Stunden in den Reaktor eingefahren. Parallel dazu werden 870 g einer 2,8%igen Natriumformaldehydsulfoxylat-Lösung innerhalb sieben Stunden zugegeben. Nach beendeter Monomerdosierung werden 11,4 g tert.-Butylhydroperoxid (70%ig) im Schuß zugegeben. Nach beendeter Zugabe von tert.-Butylhydroperoxid werden in der fünften Stunde bei einem Umsatz von 44 % bezogen auf 100 % Monomer 858 g Wasser innerhalb einer Stunde zugegeben. Nach beendeter Wasserzugabe wurde der Polymerisationsreaktor weitere vier Stunden unter Rührung sich selbst überlassen. Anschließend wurde der Reaktor in 20 Min. auf Raumtemperatur gekühlt. Die Brookfieldviskosität der Dispersion beträgt 1460 mPas bei einem Festkörpergehalt von 50,5 % (47,8 % nach der Polymerisation) und einer Teilchengröße von 461 nm (Coulter Nano-Sizer). Ohne Ultraschallbehandlung liegt die Teilchengröße des in Wasser dispergierten Pulvers bei D₅₀= 29,23 µm. Nach 900 s Ultraschalbehandlung ist das Pulver auf eine mittlere Teilchengröße D₅₀= 8,20 µm zerfallen. Eine Mörtelmischung ist mit dem aus der Dispersion durch Trocknung hergestellten Pulver bei einem Wasser-Zementverhältnis von 0,38 Zementstabil.

### Beispiel 3 (1277)

In einem 12-Liter Druckautoklaven mit Blattrührer und Manteltemperierung wurden 861 g Wasser, 1005 g einer 19,9%igen PVA-Lösung (Hydrolisierungsgrad ca. 87 %), 4 g EDTA und 8 g Triethanolamin vorgelegt und auf 70 °C aufgeheizt. Wenn die Reaktorinnentemperatur konstant bleibt werden 4 g Natriumperoxodisulfat und 34,3 g tert.-Butylhydroperoxid (70%ig) im Schuß zugegeben. Parallel dazu werden 865 g einer 4,5 Gew.-%igen PVA-Lösung innerhalb einer Stunde zugegeben. Fünf Minuten nach der Natriumperoxodisulfat und tert.-Butylhydroperoxid-Zugabe werden 2400 g Styrol, 16 g tert.-Dodecylmercaptan, 280 g Hydroxyethylmethacrylat und 1400 g Butadien in fünf Stunden in den Reaktor eingefahren. Parallel dazu werden 870 g einer 2,8%igen Natriumformaldehydsulfoxylat-Lösung innerhalb sieben Stunden zugegeben. Nach beendeter Monomerdosierung werden in der fünften Stunde 11,4 g tert.-Butylhydroperoxid (70%ig) im Schuß zugegeben. Nach erfolgter tert.-Butylhydroperoxid-Zugabe wurden 865 g einer 4,5 Gew-%igen PVA-Lösung innerhalb einer Stunde zugegeben. Der Umsatz beträgt bei Beginn der Zugabe 47 % bezogen auf 100 % Monomere. Nach beendeter Zugabe der PVA-Lösung wurde der Polymerisationsreaktor weitere vier Stunden unter Rührung sich selbst überlassen. Anschließend wurde der Reaktor in 20 Min. auf Raumtemperatur gekühlt. Die Brookfieldviskosität der Dispersion beträgt 1500 mPas bei einem Festkörpergehalt von 50,5 % nach der Polymerisation und einer Teilchengröße von 539 nm (Coulter Nano-Sizer). Eine Mörtelmischung ist mit dem aus der Dispersion durch Trocknung hergestellten Pulver bei einem Wasser-Zementverhältnis von 0,38 Zementstabil. Das Pulver zerfällt in Wasser auf eine mittlere Teilchengröße von D₅₀=31,95 µm und nach 900 s Ultraschallbehandlung auf eine mittlere Teilchengröße von D₅₀=8,88 µm. Bei einem W/Z-Verhältnis von 0,38 ist das Pulver Zementstabil.

### Vergleichsbeispiel 1:

Dieser Ansatz wurde analog Beispiel 1 hergestellt, mit der Ausnahme, das auf die Wasserdosierung nach der Monomerzugabe verzichtet wurde. In einem 12-Liter Druckautoklaven mit Blattrührer und Manteltemperierung wurden 2533 g Wasser, 1015 g einer 19,7%igen PVA-Lösung (Hydrolisierungsgrad ca. 87 %), 4 g EDTA, 12 g Natriumcarbonat und 8 g Triethanolamin vorgelegt und auf 70 °C aufgeheizt. Wenn die Reaktorinnentemperatur konstant bleibt werden 4 g Natriumperoxodisulfat und 34,3 g tert.-Butylhydroperoxid (70%ig) im Schuß zugegeben. Fünf Minuten danach wird mit der Dosierung der Zuläufe begonnen. 2460 g Styrol, 16 g tert.-Dodecylmercaptan, 250 g Hydroxyethylmethacrylat und 1340 g Butadien werden in fünf Stunden in den Reaktor eingefahren. Parallel dazu werden 870 g einer 2,8%igen Natriumformaldehydsulfoxylat-Lösung innerhalb sieben Stunden zugegeben. Nach beendeter Monomerdosierung werden 11,4 g tert.-Butylhydroperoxid (70%ig) im Schuß zugegeben. Danach wurde der Polymerisationsreaktor weitere fünf Stunden unter Rührung sich selbst überlassen. Anschließend wurde der Reaktor in 20 Min. auf Raumtemperatur gekühlt. Der Ansatz wurde nicht aufgearbeitet, weil er sehr viskos und stippig war.

Das Vergleichsbeispiel 1 belegt, dass erst durch die Wasserzugabe nach erfolgter Monomerzugabe und einem Umsatz von mindestens 40 % die Herstellung einer Schutzkolloidstabilisierten, emulgatorfreien Dispersion mit einem Festkörpergehalt von ca. 50 % gelingt. Wird das Wasser in die Vorlage oder schon vorher parallel zur Monomerzugabe, oder vor dem Erreichen eines Umsatzes von 40 % bezogen auf 100 % Monomer zugegeben, so ist die Viskosität des Endproduktes viel höher. Häufig ist zu beobachten, dass nach Entfernung der Restmonomere die so hergestellten Dispersionen koagulieren.

### Vergleichsbeispiel 2:

Die Dispersion wurde analog dem Vergleichsbeispiel 2 hergestellt, wobei aber zusätzlich der theoretische Festkörpergehalt von 50 % auf 40 % gesenkt wurde. Es wurde so ein Latex erhalten mit einem Festkörpergehalt von 39,7 %, einer Brookfield-Viskosität von 175 mPas (Spindel 2, 30 Upm) und einer Teilchengröße von 267 nm (Coulther-Nanosizer). Ohne Ultraschallbehandlung liegt die mittlere Teilchengröße des redispergierten Pulvers bei D₅₀=66,72 µm. Nach 900 s Ultraschallbehandlung liegt die mittlere Teilchengröße unverändert bei D₅₀=63,77 µm. Der Luftporengehalt der Mörtelmischung ist nach Zusatz der Dispersion mit 11 % höher als bei den Beispielen 1 bis 3. Mit dem daraus hergestellten Pulver lässt sich bei einem Wasser-Zement-Verhältnis von 0,38 und 0,46 kein Mörtelkuchen herstellen, weil die Mörtelmischung zu trocken ist. Das Vergleichsbeispiel 2 belegt, dass die Wasserzugabe nach erfolgter Monomerzugabe die Zementstabilität und Redispergierbarkeit des Pulvers verbessert. Eine verdünntere Fahrweise durch Absenken des Festkörpergehalts von 50 % auf 40 % ermöglicht zwar die Herstellung einer emulgatorfreien Dispersion, deren Pulver jedoch in der Zementstabilität und Redispergierbarkeit deutlich schlechter abschneidet. Außerdem ist die Herstellung der Dispersion mit einem kleineren Festkörpergehalt weniger Wirtschaflich.

Beim Vinylacetat-Ethylen-Copolymer-Pulver Vinnapas RE 545 Z ist die Redispergierbarkeit in Wasser mit Ultraschallbehandlung besser als bei den erfindungsgemäßen Pulvern (Tabelle 1). In der Zementstabilität sind die erfindungsgemäßen Pulver jedoch gleichwertig.

Mit dem erfindungsgemäßen Herstellungsverfahren gelingt die Polymerisation von Schutzkolloid-Stabilisierten, emulgatorfreien Dispersionen auf Basis von unpolaren und hydrophoberen Monomern. Das durch Sprühtrocknung der Dispersion erhaltene Pulver verfügt über eine gute Redispergierbarkeit und Zementstabilität.

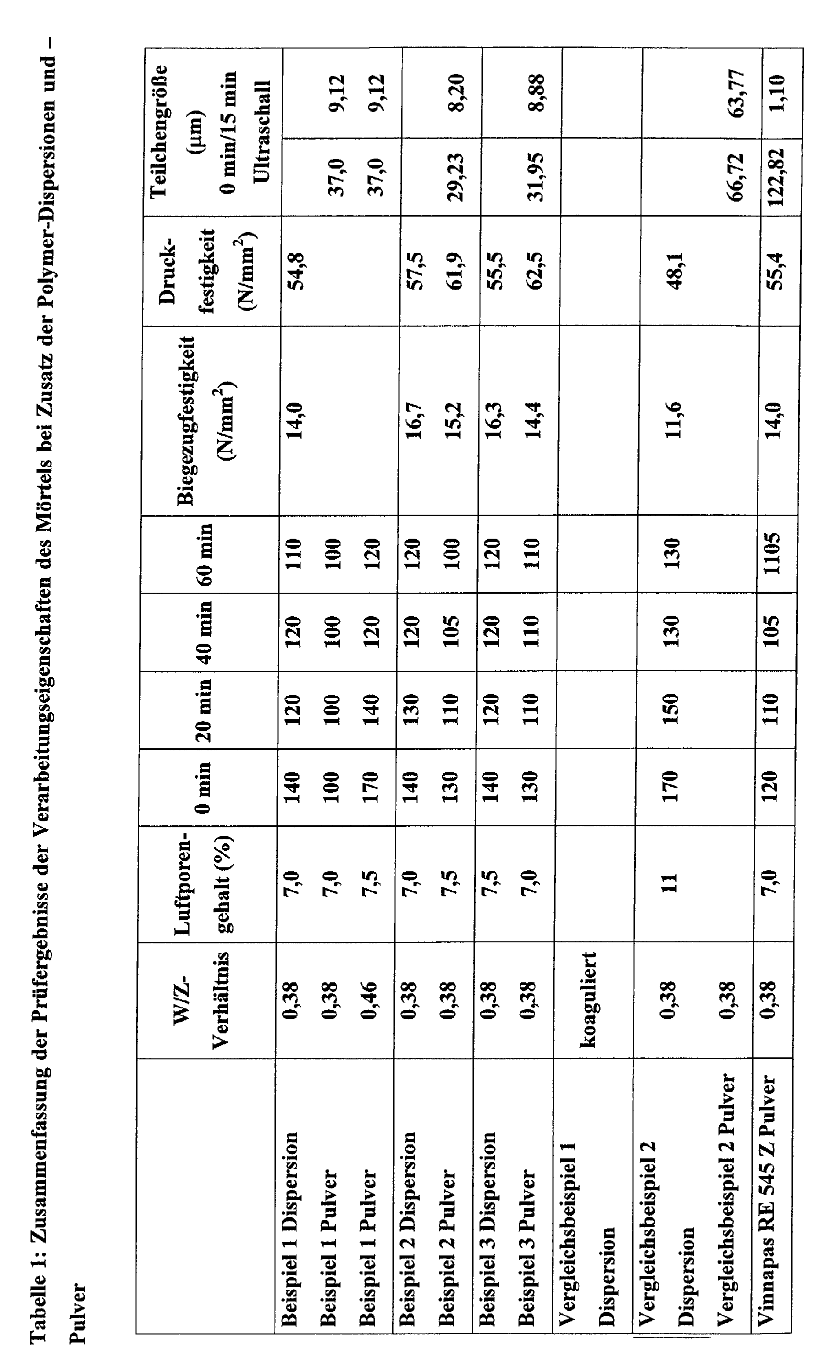

## Patentansprüche

1. Verfahren zur Herstellung von schutzkolloidstabilisierten, emulgatorfreien, wässrigen Dispersionen auf der Basis von mindestens zwei Monomeren ausgewählt aus Vinylaromaten, 1,3-Dienen und/oder (Meth)Acrylsäureestern in Gegenwart von Hilfsstoffen und gegebenenfalls weiteren Comonomeren in einer Menge von 0,1 Gew.-% bis 20 Gew.-%, bezogen auf die Gesamtmenge an Monomeren,
**dadurch gekennzeichnet,**
**dass** mindestens 10 Gew.-% der gesamten Wassermenge erst in das Reaktionsgefäß gegeben werden, nachdem die Monomeren in das Reaktionsgefäß gegeben wurden und der Umsatz, bezogen auf 100 % der Monomeren, mindestens 40 % beträgt.

2. Verfahren nach Anspruch 1,
**dadurch gekennzeichnet,**
**dass** als Vinylaromaten Styrol und/oder Methylstyrol eingesetzt werden.

3. Verfahren nach Anspruch 1 oder 2,
**dadurch gekennzeichnet,**
**dass** als 1,3-Diene 1,3-Butadien und/oder Isopren eingesetzt werden.

4. Verfahren nach mindestens einem der Ansprüche 1 bis 3,
**dadurch gekennzeichnet,**
**dass** (Meth)Acrylsäureester von Alkoholen mit 1 bis 15 C-Atomen einsetzt werden.

5. Verfahren nach Anspruch 4,
**dadurch gekennzeichnet,**
**dass** Methylacrylat, Methylmethacrylat, Ethylacrylat, Ethylmethyacrylat, Propylacrylat, Propylmethacrylat, n-Butylacrylat, t-Butylacrylat, n-Butylmethacrylat, t-Butylmethacrylat, 2-Ethylhexylacrylat eingesetzt werden.

6. Verfahren nach mindestens einem der Ansprüche 1 bis 5,
**dadurch gekennzeichnet,**
**dass** Hilfsstoffe, ausgewählt aus Schutzkolloiden, Initiatoren, pH-Wert-Regulatoren, Molekulargewichtsreglern eingesetzt werden.

7. Verfahren nach mindestens einem der Ansprüche 1 bis 6,
**dadurch gekennzeichnet,**
**dass** als Schutzkolloide Polyvinylalkohole, Polyethylenglykol, modifizierte Stärke, Dextrine, Cellulosederivate, Polyvinylpyrolidon, Polystyrol-*b*-Polyethylenoxid- oder Poly(Methacrylat*-b*-Polyethylenoxid-Blockcopolymere oder Casein, allein oder in Mischungen, eingesetzt werden.

8. Verfahren nach mindestens einem der Ansprüche 1 bis 7,
**dadurch gekennzeichnet,**
**dass** als Initiatoren Peroxide, Hydroperoxide, Wasserstoffperoxid, Natrium-, Kalium-, oder Ammoniumperoxodisulfat, Azoverbindungen, allein oder in Mischungen, eingesetzt werden.

9. Verfahren nach mindestens einem der Ansprüche 1 bis 8,
**dadurch gekennzeichnet,**
**dass** als pH-Wert-Regulatoren Natriumcarbonat, Natriumhydrogencarbonat, Trikaliumphosphat, Ethylendiamintetracetat, oder Nitrilotriessigsäure, allein oder in Mischungen, eingesetzt werden.

10. Verfahren nach mindestens einem der Ansprüche 1 bis 9,
**dadurch gekennzeichnet,**
**dass** als Molekulargewichtsregler n-Dodecylmercaptan, tert.-Dodecylmercaptan, Mercaptopropionsäure, Mercaptopropionsäuremethylester, und/oder Triethanolamin allein oder in Mischungen, eingesetzt werden.

11. Verfahren nach mindestens einem der Ansprüche 1 bis 10,
**dadurch gekennzeichnet,**
**dass** Comonomere, ausgewählt aus Hydroxy(C₁- bis C₈-Alkyl)(meth)acrylsäureestern, ethylenisch ungesättigten Mono- und Dicarbonsäuren, ethylenisch ungesättigten Carbonsäureamiden und -nitrilen, Mono- und Diestern der Fumarsäure oder Maleinsäure, ethylenisch ungesättigte Sulfonsäuren bzw. deren Salze, vorvernetzenden Comonomeren, nachvernetzenden Comonomeren, epoxyfunktionelle Comonomeren, und Silicium-Funktionellen Comonomeren, allein oder in Mischungen, eingesetzt werden.

12. Verfahren nach Anspruch 11,
**dadurch gekennzeichnet,**
**dass** als Comonomere Hydroxyethylacrylat, Hydroxyethylmethacrylat, Hydroxypropylacrylat, Hydroxy(2-ethylhexyl)acrylat, Acrylsäure, Methacrylsäure, Fumarsäure, Maleinsäure, Acrylamid, Acrylnitril, Diethyl- und/oder Diisopropylester der Fumarsäure und Maleinsäure, Maleinsäureanhydrid, Vinylsulfonsäure, 2-Acrylamido-2-methyl-propansulfonsäure, Divinyladipat, Diallylmaleat, Allylmethacrylat, N-Methylolacrylamid (NMA), N-Methylolmethacrylamid (NMMA), Ester des N-Methylolacrylamids oder N-Methylolmethacrylamids, Glycidylmethacrylat, Glycidylacrylat, Acryloxypropyltri(alkoxy)- und Methacryloxypropyltri(alkoxy)-Silane, Vinyltrialkoxysilane, Vinylmethyldialkoxysilane, wobei die Alkoxygruppen beispielsweise Ethoxy- und Ethoxypropylenglykolether-Reste sein können, allein oder in Mischungen, eingesetzt werden.

13. Verfahren nach mindestens einem der Ansprüche 1 bis 12,
**dadurch gekennzeichnet,**
**dass** die Polymerisationstemperatur 30 bis 90 °C beträgt.

14. Verfahren nach mindestens einem der Ansprüche 1 bis 13,
**dadurch gekennzeichnet,**
**dass** das Verhältnis von Festkörper zu Wasser entsprechend einem Feststoffgehalt der fertigen Dispersion von 30 bis 70 % eingestellt wird.

15. Verfahren nach mindestens einem der Ansprüche 1 bis 14,
**dadurch gekennzeichnet,**
**dass** die gesamte Schutzkolloidmenge vorgelegt wird und die Monomeren und Hilfsstoffe während der Polymerisation zugeführt werden.

16. Schutzkolloidstabilisierte, emulgatorfreie, wässrige Dispersionen auf der Basis von Vinylaromaten und 1,3-Dienen und gegebenenfalls weiteren Comonomeren in einer Menge, bezogen auf die Gesamtmenge an Monomeren, von 0,1 Gew.-% bis 20 Gew.-%, erhalten durch Umsetzung der Monomeren in Gegenwart von Hilfsstoffen, wobei mindestens 10 Gew.-% der gesamten Wassermenge erst in das Reaktionsgefäß gegeben werden, nachdem die Monomeren in das Reaktionsgefäß gegeben wurden und der Umsatz, bezogen auf 100 % der Monomeren, mindestens 40 % beträgt.

17. Verwendung der Dispersion gemäß Anspruch 16, hergestellt nach mindestens einem der Ansprüche 1 bis 15, zur Herstellung von redispergierbaren Pulvern.

18. Verwendung der Dispersion gemäß Anspruch 16, hergestellt nach mindestens einem der Ansprüche 1 bis 15, zur Herstellung von Klebstoffzusammensetzungen, Spachtelmassen, Mörtel, Gipsbaustoffen und Dispersionsfarben.
